# EUROPEAN PATENT APPLICATION

(11) **EP 0 819 715 A1**
(43) Date of publication of application: **21.01.1998**
(21) Application number: 97110939.2
(22) Date of filing: 02.07.1997
(51) Int. Cl.: C08G 18/78, C08G 18/76, C08G 18/65

(54) **Water blown polyurethane integral skin foam having improved abrasion resistance**

(30) Priority: 15.07.1996 US 680094
(71) Applicant: Bayer Corporation, Pittsburgh, PA 15205 (US)
(72) Inventor: Madaj, Edmund J., Imperial, PA 15126 (US); Slack, William E., Moundsville, WV 26041 (US)
(74) Representative: Zobel, Manfred, Dr.

(57) **Abstract**

This invention relates to a process for preparing integral skin foams from a specific reaction mixture. The isocyanate of this reaction mixture comprises a stable. liquid MDI based prepolymer containing an allophanate-modified MDI, and having an NCO content of 5 to 30%. This isocyanate comprises the reaction product of an allophanate-modified MDI and a polyether polyol. Integral skin foams prepared from these allophanate-modified isocyanate prepolymers exhibit improved properties and improved resistance to Taber abrasion in comparison to conventional isocyanate prepolymers.

## Description

### BACKGROUND OF THE INVENTION

### Field of the Invention

This invention relates to integral skin foams having improved properties, and a process for the production of these foams. These foams are prepared from an isocyanate comprising a stable, liquid MDI based prepolymer containing an allophanate-modified MDI.

Liquid diphenylmethane diisocyanates and their use in the preparation of integral skin foams is generally known in the art. Various types of liquid diphenylmethane diisocyanates include, for example, isocyanate prepolymers, allophanate-group containing isocyanates, carbodiimide group containing isocyanates, biuret group containing isocyanates, etc. These are described in, for example, U.S. Patents 3,644,457, 4,055,548, 4,115,429, 4,118,411, 4,160,080, 4,261,852, 4,490,300, 4,738,991 and 4,866,103, and GB 994,890.

Integral skin foams prepared from polyurethane are also well known in the art. These are described in, for example, U.S. Patents 3,523,918, 3,726,952, 3,836,487, 3,925,527, 4,020,001, 4,024,090, 4,065,410, 4,305,991 and 5,166,183; and CA 1,277,471.

U.S. Patent 3,644,457 discloses room temperature stable liquid isocyanates derived from one mole of diphenylmethane diisocyanate and 0.1 to 0.3 mols of poly-1,2-propylene ether glycol.

U.S. Patent 4,055,548 discloses liquid isocyanate prepolymer compositions obtained by reacting polymethylene polyphenylisocyanate containing from about 65 to 85 percent by weight of methylene bis(phenyl)isocyanate with a polyoxyethylene glycol having molecular weight of from 200 to 600 in an equivalent ratio of 0.0185 to 0.15:1.

U.S. Patents 4,115,429 and 4,118,411 disclose low temperature (as low as -5°C), storage stable liquid diphenylmethane diisocyanates which are produced by reacting diphenylmethane diisocyanates having a specified 2,4-isomer content with propylene glycol or poly-1,2-propylene ether glycol.

U.S. Patent 4,261,852 discloses liquid polyisocyanate compositions comprising (a) the reaction product of 90 to 50% by weight of a reaction product of diphenylmethane diisocyanate and a polyoxypropylene diol or triol having a hydroxyl equivalent weight of from 750 to 3000, said reaction product having an NCO content of from 8 to 26% by weight, and (b) from about 10 to 50% by weight of a diphenylmethane diisocyanate containing from 30 to 65% by weight of diphenylmethane diisocyanate, the remainder being polymethylene polyphenyl polyisocyanate.

U.S. Patent 4,490,300 discloses room temperature stable liquid isocyanates which are derived by reacting diphenylmethane diisocyanate with an aliphatic diol having a pendant aromatic group, e.g., 2-methyl-2-phenyl-1,3-propanediol or phenyl-1-2-ethanediol.

U.S. Patent 4,490,301 discloses room temperature stable liquid isocyanates which are derived by reacting diphenylmethane diisocyanate with monoallylether of trimethylolpropane.

U.S. Patent 4,738,991 discloses organic polyisocyanates characterized by allophanate linkages which are prepared by reacting an organic polyisocyanate including 2,4- and 4,4-methylenediphenyl diisocyanate with poly- or monohydric alcohol in the presence of an organometallic catalyst. The catalyst is then deactivated using a compound such as an inorganic acid, organic acid, organic chloroformate or an organic acid chloride. This reference also discloses that flexible foams can be prepared from these allophanate group containing isocyanates. All of the examples relate to TDI based allophanate group containing isocyanates, and only one of these prepares a high resilience flexible foam.

U.S. Patent 4,866,103 discloses a polyisocyanate composition for use in producing elastomers in a RIM process. This polyisocyanate composition is the reaction product of an alcohol and/or thiol having an average functionality of from about 1.5 to about 4 and an average equivalent weight of at least 500 with at least 2 equivalents per hydroxyl and/or thiol equivalent of an organic polyisocyanate including 4,4- and 2,4-isomers of diphenylmethane diisocyanate. The disclosed reaction is carried out under conditions such that at least about 20% of the initially formed urethane and/or thiourethane groups are converted to allophanate and/or thioallophanate groups.

Another process for the preparation of allophanates which contain isocyanates is disclosed in British Patent 994,890 which relates to the reaction of urethane isocyanates with excess diisocyanate either by heat alone or in the presence of a catalyst such as a metal carboxylate, a metal chelate or a tertiary amine, until the isocyanate content is reduced to that which is obtained theoretically when the complete reaction of the urethane groups is achieved.

U.S. Patent 4,160,080 discloses a process for producing allophanate-containing aliphatically and/or cycloaliphatically bound isocyanate groups. In this disclosed process, compounds containing urethane groups are reacted with polyisocyanates having aliphatic and/or cycloaliphatic isocyanate groups in the presence of a strong acid. The process is generally conducted at a temperature of from 90°C to 140°C for about 4 to 20 hours.

Japanese Patent Application No. 1971-99176 discloses a method of preparing liquid diphenylmethane diisocyanate by reacting diphenylmethane diisocyanate with an aliphatic monovalent alcohol.

Integral skin foams are described and prepared in U.S. Patent 4,305,991. These foams are prepared from a reaction mixture containing a polyisocyanate wherein the isocyanate groups are aliphatically and/or cycloaliphatically bound. These polyisocyanates may contain adducts such as, for example, carbodiimide-, allophanate-, isocyanurate-, uretdione-, biuret-groups, etc. The aliphatic isocyanates used to prepare these foams provides resistance to UV light and to decomposition by heat.

U.S. Patent 5,166,183 also describes integral skin foams. The polyisocyanate composition used therein has an NCO content of about 16 to 25%, and consists of i) from 10 to 100 parts by weight of an isocyanate having an NCO content of about 16 to 22% which is prepared by blending methylenebis(phenyl isocyanate) and a carbodiimide group modified methylenebis(phenyl isocyanate), followed by reacting with a polyester diol to form a product. This product is then blended with ii) from 0 to 90 parts by weight of a modified isocyanate having an NCO content of about 18 to 25% which is prepared by reacting methylenebis(phenyl isocyanate) with poly-1,2-propylene ether glycol. The presence of the carbodiimide-modified isocyanate in the prepolymer serves to reduce the freezing point.

The integral skin foams of the '183 patent are described as exhibiting improved abrasion resistance. This is contributed to by the use of a polyester in the prepolymer formation. Polyesters, however, add to the cost of the prepolymer and have decreased miscibility (solubility) with polyethers such that the processing of the systems is difficult.

Carbodiimide modified isocyanates are also disclosed as suitable isocyanates for the production of integral skin foams in U.S. Patent 5,342,856. These isocyanates are reacted with an isocyanate-reactive component and a solution of a zinc carboxylate in an aliphatic polyamine. These solutions of zinc carboxylates in aliphatic polyamines and water are essential to the preparation of integral skin foams.

An object of the present invention was to develop an MDI based prepolymer which would result in acceptable properties in water-blown integral skin foams. Another object was to avoid the disadvantages of other integral skin foams including, for example, the cost of prepolymers prepared from polyesters and/or carbodiimide-modified isocyanates, and the problems associated with boardiness when using prepolymers made with tripropylene glycol.

### SUMMARY OF THE INVENTION

This invention relates to a process for the production of an integral skin foam, and the integral skin foam produced by this process. This process comprises filling a closed mold with a reaction mixture which comprises A) a stable, liquid MDI-based prepolymer containing an allophanate-modified MDI with B) an isocyanate-reactive composition, C) a blowing agent comprising water and D) at least one catalyst. The A) stable, liquid MDI-based prepolymers having an NCO content of 5 to 30%, preferably of 15 to 29%, and more preferably of 18 to 27%, and containing an allophanate-modified MDI, wherein the prepolymer comprises the reaction product of:
1) an allophanate-modified MDI prepared by reacting
   i) an aliphatic alcohol or an aromatic alcohol, wherein said alcohol contains less than 16, preferably less than 9 carbon atoms,
      with
   ii) diphenylmethane diisocyanate comprising about 0 to 60% by weight of 2,4'-diphenylmethane diisocyanate, less than 6% by weight of the 2,2'-diphenylmethane diisocyanate, and the rest being 4,4'-diphenylmethane diisocyanate,
   and
2) a polyether polyol containing from 2 to 3 hydroxyl groups and having a molecular weight of about 76 to 10,000, preferably about 150 to about 6,000.

Suitable isocyanate-reactive compositions comprise:
1) from 80 to 99% by weight, preferably 85 to 97%, based on 100% by weight of components B)1) and B)2), of one or more high molecular weight organic compounds containing at least 2, preferably from 2 to 3 isocyanate-reactive groups, and having a molecular weight of from about 2,000 to about 10,000, preferably from about 4,000 to about 6,000, and
2) from 1 to 20%, preferably 3 to 10%, based on the 100% by weight of components B)1) and B)2), of one or more low molecular weight organic compounds containing at least 2, preferably 2 to 3 isocyanate-reactive groups, and having a molecular weight of from 32 to 200, preferably 60 to 150.

The reaction mixture also contains C) a blowing agent comprising water and D) at least one catalyst. This reaction mixture, inside the closed mold, is allowed to fully react to form the integral skin foam, and the resultant integral skin foam is removed from the mold.

This invention also relates to integral skin foams produced by the above process.

### DETAILED DESCRIPTION OF THE INVENTION

Suitable stable, liquid MDI based prepolymers having an NCO content of from about 5 to 30%, preferably of 15 to 29%, and more preferably of 18 to 27%, and containing an allophanate-modified MDI. These stable, liquid MDI based prepolymers comprise the reaction product of: 1) an allophanate-modified MDI and 2) a polyether polyol. These isocyanate prepolymers are known and described in, for example, U.S. Patent 5,319,053, the disclosure of which is herein incorporated by reference.

Suitable 1) allophanate-modified MDI to be used in the preparation of the stable, liquid MDI based prepolymer comprises the reaction product of (i) an aliphatic alcohol or an aromatic alcohol, wherein said alcohol contains less than 16, preferably less than 9 carbon atoms, and (ii) diphenylmethane diisocyanate comprising about 0 to 60% by weight of 2,4'-diphenylmethane diisocyanate, less than 6% by weight of the 2,2'-diphenylmethane diisocyanate, and the remainder being 4,4'-diphenylmethane diisocyanate. Some compounds suitable for use as the aliphatic alcohols (i) include, for example, isomeric butanols, isomeric propanols, isomeric pentanols, isomeric hexanols, cyclohexanol, 2-methoxyethanol, 2-bromoethanol, etc. Suitable aromatic alcohols for use in the preparation of the allophanate-modified prepolymer include, for example, phenol, 1-naphthol, m-cresol, and p-bromophenol. Preferred aliphatic alcohols are 1-butanol, 1-pentanol, and 1-propanol. Preferred aromatic alcohols are phenol and m-cresol.

The diphenylmethane diisocyanate preferably comprises about 1 to 3% of the 2,4'-isomer of MDI, 0 to 1% of the 2,2'-isomer of MDI, and 96 to 99% of the 4,4'-isomer of MDI. It is preferred that the 1) allophanate-modified MDI is also a stable liquid and has an NCO content of about 15 to 29%.

Suitable polyether polyols 2) to be reacted with 1) the allophanate-modified MDI to form the presently required A) stable, liquid MDI prepolymers containing an allophanate-modified MDI include those polyether polyols containing from about 2 to 3 hydroxyl groups and having molecular weights of about 76 to about 10,000, preferably about 150 to about 6,000.

These polyether polyols may be obtained in known manner by the reaction of starting compounds which contain reactive hydrogen atoms with alkylene oxides such as ethylene oxide, propylene oxide, butylene oxide, styrene oxide, tetrahydrofuran, epichlorohydrin or mixtures of these alkylene oxides. Suitable starting compounds containing reactive hydrogen atoms include the polyhydric alcohols such as, for example, ethylene glycol, propylene glycol-(1,2) and -(1,3); butylene glycol-(1,4) and 1(1,3); hexanediol-(1,6); octanediol-(1,8); neopentyl glycol, cyclohexanedimethanol (1,4-bis-hydroxymethylecyclohexane); 2-methyl-1,3-propanediol; 2,2,4-trimethyl-1,3-pentanediol, triethylene glycol, tetraethylene glycol, polyethylene glycol; dipropylene glycol; polypropylene glycol; dibutylene glycol and polybutylene glycol; glycerine and trimethylolpropane; and, in addition, water, methanol, ethanol, 1,2,6-hexane triol, 1,2,4-butane triol, trimethylol ethane, pentaerythritol, mannitol, sorbitol, methyl glycoside, sucrose, phenol, isononyl phenol, resorcinol, hydroquinone, 1,1,1- or 1,1,2-tris-(hydroxylphenyl)-ethane. Preferred polyether polyols for the preparation of the stable liquid MDI based prepolymer containing allophanate groups are those compounds having a functionality of 2 or 3, molecular weights of about 1,500 to about 6,000, and prepared by alkoxylation of a suitable starter with ethylene oxide, propylene oxide or mixtures thereof.

The above described liquid MDI-based prepolymer containing allophanate groups is reacted with an isocyanate-reactive composition to form an integral skin foam. These isocyanate-reactive compositions comprise B)1) one or more organic compounds containing at least 2, preferably 2 to 3 isocyanate-reactive groups and having a molecular weight of from about 2000 to about 10,000, preferably about 4,000 to 6,000, and B)2) one or more organic compounds containing at least two, preferably 2 to 3 isocyanate-reactive groups and having a molecular weight of from about 32 to about 200, preferably about 60 to about 150.

Suitable for use as organic compounds containing at least 2 isocyanate-reactive groups and having molecular weights of about 2,000 to about 10,000 include, for example, polyethers, polyesters, polymer polyols, PHD polyols (a dispersion of a polyurea and/or polyhydrazodicarbonamide in a relatively high molecular weight organic compound containing at least two hydroxyl groups), polythioethers, polyacetals, polycarbonates, and amine terminated polyethers containing at least 2 isocyanate-reactive groups of the type known for the production of polyurethanes.

Suitable high molecular weight polyethers for use in accordance with the invention are known and may be obtained, for example, by polymerizing tetrahydrofuran or epoxides such as, for example, ethylene oxide, propylene oxide, butylene oxide, styrene oxide or epichlorohydrin in the presence of suitable catalysts, such as, for example, BF₃ or KOH, or by chemically adding these epoxides, preferably ethylene oxide and propylene oxide, in admixture or successively to components containing reactive hydrogen atoms such as water, alcohols or amines. Examples of suitable alcohols and amines include the low molecular weight chain extenders set forth hereinafter propylene glycol, glycerin, ethylene glycol, triethanolamine, water, trimethylolpropane, bisphenol A, sucrose, aniline, ammonia, ethanolamine and ethylene diamine. It is preferred to use polyethers having a functionality of 2 or 3, molecular weights of about 1,500 to about 6,000, and prepared by alkoxylation of a suitable starter with ethylene oxide, propylene oxide or mixtures thereof.

Suitable low molecular weight chain extenders to be used in the polyol mixture include organic compounds containing hydroxyl groups, amino groups, and sulfhydryl groups which have molecular weights of about 32 to about 200. Suitable compounds include, for example, diols, triols, diamines, triamines, dithiols, trithiols, and mixtures thereof. Hydroxyl group containing chain extenders are preferred.

Some examples of suitable hydroxyl group containing compounds include glycols, such as, for example, ethylene glycol, propylene glycol, 1,2- and 1,3-propane diol, 1,3- and 1,4- and 2,3-butanediol, 1,6-hexanediol, dipropylene glycol, tripropylene glycol, diethylene glycol (i.e. DEG), triethylene glycol (i.e. TEG), tetraethylene glycol, tetrapropylene glycol, heptapropylene glycol, 2-methyl-1,3-propanediol, 1,10-decanediol, neopentyl glycol, and 2,2,4-trimethylpentane-1,3- diol, etc. Preferred chain extenders include ethylene glycol, 1,4-butanediol, and diethylene glycol.

The present invention also requires water as a blowing agent. It is also possible that water may be used in conjunction with other blowing agents such as, for example, pentane, acetone, partially or completely fluorinated hydrocarbons, and methylene chloride. It is preferred that water is used as the sole blowing agent.

When water is used as the sole blowing agents, it is typically used in the present invention in quantities of between about 0.05 to 1% by weight, and preferably between about 0.35 to 0.7% by weight, based on 100% by weight of the polyol-side (B-side) of the formulation. Of course, as described above, water may be used in combination with other blowing agents. The above ranges for water as a sole blowing agent are exceeded when mixtures of water and another blowing agent are used in the present invention. Blowing agent mixtures of this type are required to be present in quantities which are typical of a conventional process for producing an integral skin foam.

Catalysts are also required to be present in the reaction mixture according to the present invention. Suitable catalysts include, for example, tertiary amine catalysts and organometallic catalysts.

Some examples of suitable organometallic catalysts include, for example organometallic compounds of tin, lead, iron, bismuth, mercury, etc. Preferred organotin catalysts include compounds such as, for example, tin acetate, tin octoate, tin ethylhexanoate, tin oleate, tin laurate, dimethyltin dilaurate, dibutyltin oxide, dibutyltin dichloride, dimethyltin dichloride, dibutyltin diacetate, diethyltin diacetate, dimethyltin diacetate, dibutyltin dilaurate, diethyltin dilaurate, dimethyltin dilaurate, dibutyltin maleate, dimethyltin maleate, dioctyltin diacetate, dioctyltin dilaurate, di(2-ethylhexyl)tin oxide, etc. Delayed action or heat-activated tin catalysts such as, for example, dibutyltin dimercaptide, dibutyltin diisooctylmercaptoacetate, dimethyltin dimercaptide, dibutyltin dilaurylmercaptide, dimethyltin dilaurylmercaptide, dimethyltin diisooctylmercaptoacetate, di(n-butyl)tin bis(isooctylmercaptoacetate), and di(isooctyl)tin bis(isooctylmercaptoacetate), all of which are commercially available from Witco Chemical Corp., are especially preferred. The use of a delayed action catalyst such as an iron pentanedione or a bismuth carboxylate, as described in U.S. Patent 4,611,044, herein incorporated by reference, is also possible.

Suitable heat-activated catalysts for the present invention are amine salts. These catalysts include aliphatic and aromatic tertiary amines. Suitable heat-activated amine salts include compounds such as, for example, DABCO 8154 commercially available from Air Products, a formic acid blocked triethylene diamine, and other delayed action catalysts such as DABCO WT, also commercially available from Air Products; and Polycat SA-1 and Polycat SA-102 which are both acid-blocked versions of 1,8-diazabicyclo[5.4.0]undecene-7 (i.e. Polycat DBU) and commercially available from Air Products. Trialkyl amines and heterocyclic amines are also suitable for the present invention. Suitable compounds include, for example, trimethylamine, triethylamine, tripropylamine, tributylamine, dimethylcyclohexylamine, dibutylcyclohexylamine, dimethylethanolamine, triethanolamine, diethylethanolamine, ethyldiethanolamine, dimethylisopropanolamine, triisopropanolamine, triethylene diamine, tetramethyl-1,3-butanediamine, N,N,N',N'-tetramethylethylenediamine, N,N,N',N'-tetramethylhexanediamine-1,6, N,N,N',N',N''-pentamethyldiethylenetriamine, bis(2-dimethylaminoethoxy)-methane, N,N,N'-trimethyl-N'-(2-hydroxyethylethyldiamine, N,N-dimethyl-N',N'-(2-hydroxyethyl)-ethylenediamine, tetramethylguanidine, N-methylpiperidine, N-ethylpiperidine, N-methylmorpholine, N-ethylmorpholine, 1,4-dimethylpiperidine, 1,2,4-trimethylpiperidine, N-(2-dimethylaminoethyl)-morpholine, 1-methyl-4-(2-dimethylamino)-piperidine, 1,4-diazabicyclo-[2.2.2]octane, 2-methyl-1,4-diazabicyclo[2.2.2]octane quinuclidine, 1,5-diazabicyclo[5.4.0]-5-undecene, and 1,5-diazabicyclo[4.3.0]-5-nonane.

Organometallic catalysts are usually used in amounts ranging from about 0.005 to about 0.5% by weight, preferably about 0.02 to 0.4% by weight, based on 100% by weight of the polyol-side (B-side) of the formulation. Tertiary amine catalysts, or salts thereof, are advantageously used in amounts ranging from about 0.05 to about 2% by weight, preferably about 0.1 to about 0.5% by weight, based on 100% by weight of the polyol-side (B-side) of the formulation. It is preferred that the total quantity of catalysts be such that they comprise less than 2% by weight, preferably less than 1% by weight of 100% by weight of the polyol-side (B-side) of the formulation.

It is also possible that various additives and/or auxiliary agents may be included in the formulation. Some examples of suitable additives include surface-active additives such as emulsifiers and foam stabilizers. Examples of these include N-stearyl-N',N'-bis-hydroxyethyl urea, oleyl polyoxyethylene amide, stearyl diethanol amide, isostearyl diethanolamide, polyoxyethylene glycol monoleate, a pentaerythritol/adipic acid/oleic acid ester, a hydroxy ethyl imidazole derivative of oleic acid, N-stearyl propylene diamine and the sodium salts of castor oil sulfonates or of fatty acids. Alkali metal or ammonium salts of sulfonic acid such as dodecyl benzene sulfonic acid or dinaphthyl methane sulfonic acid and also fatty acids may be used as surface-active additives.

Suitable foam stabilizers include water-soluble polyether siloxanes. The structure of these compounds is generally such that a copolymer of ethylene oxide and propylene oxide is attached to a polydimethyl siloxane radical. Such foam stabilizers are described in U.S. Patent 2,764,565.

In addition to the surface-active agents, other additives which may be used in the molding compositions of the present invention include known internal mold release agents, pigments, cell regulators, flame retarding agents, plasticizers, dyes, fillers and reinforcing agents such as glass in the form of fibers or flakes or carbon fibers.

The compositions according to the present invention may be molded using conventional processing techniques at isocyanate indexes ranging from about 95 to 105 (preferably from 98 to 103). By the term "Isocyanate Index" (also commonly referred to as NCO index), is defined herein as the equivalents of isocyanate, divided by the total equivalents of isocyanate-reactive hydrogen containing materials, multiplied by 100.

As used herein, the phrase "polyol-side" or "B-side" refers to the mixture which contains the isocyanate-reactive compositions B)1) and B)2), the blowing agent C), the catalyst D), and any other additives or auxiliary agents which were mixed in with these prior to reaction with the isocyanate A).

The following examples further illustrate details for the process of this invention. The invention, which is set forth in the foregoing disclosure, is not to be limited either in spirit or in scope by these examples. Those skilled in the art will readily understand that known variations of the conditions of the following procedures can be used. Unless otherwise noted, all temperatures are degrees Celsius and all parts are parts by weight.

### EXAMPLES

The following materials were used in the working examples:
- Isocyanate A:: an allophanate-modified isocyanate prepolymer having an NCO content of 23.4%, prepared by reacting 100 parts of MDI having an isomer distribution of 98% of the 4,4'-isomer and 2% of the 2,4'-isomer, with 3.4 parts (0.57 equivalents) of 1-butanol, to yield an intermediate which was then reacted with 8.6 parts of tripropylene glycol.
- Isocyanate B:: an isocyanate prepolymer having an NCO content of 23%, prepared by reacting 100 parts of pure monomeric MDI (containing 98% of the 4,4'-isomer and 2% of the 2,4'-isomer), with 15.9 parts of tripropylene glycol.
- Polyol A:: a glycerine initiated polyoxyalkylene trio having an OH number of 28, and prepared from 87% propylene oxide and 13% ethylene oxide.
- EG:: Ethylene glycol
- Catalyst A:: a dialkyltin dimercaptide catalyst, commercially available from Witco Corporation as UL-1.
- Catalyst B:: a tertiary amine containing catalyst, commercially available from Air Products Inc. as Dabco 33LV.
- Catalyst C:: A tin-containing catalyst, commercially available from Tylo Industries as Topcat 290.

The following B-side was used in the examples:
- Polyol A: 100 parts
- EG: 4.79 parts
- Catalyst A: 0.053 parts
- Catalyst B: 0.63 parts
- Catalyst C: 0.265 parts
- Water: 0.45 parts

In the examples, the following procedure was used to prepare the foams. In each instance, a Kymofoam Type KF-IS-202 foam machine was used under the following conditions:
a) the temperature of both the A-side and the B-side was about 30°C,
b) the mold temperature was about 50°C,
c) throughput was about 60 gm/sec, and
d) the isocyanate index was 100.

Molded parts were made by pouring the liquid reaction mixture into a 20.3 cm x 20.3 cm x 2.54 cm (8 inch by 8 inch by 1 inch) aluminum plaque mold and demolding in about 3 and one half minutes. The parts were tested for density, shore A hardness, tensile strength, elongation, die C tear, block tear and abrasion resistance with the results reported in Table 1. The densities reported in Table 1 were obtained by measuring the mass (in grams) of the molded part and dividing the mass by the volume of the mold in cubic centimeters.

### Example A: (comparative)

A polyurethane foam was prepared by reacting Isocyanate B with the B-side described hereinabove at an NCO Index of 100.

### Example B: (comparative)

A polyurethane foam was prepared by reacting Isocyanate B with the B-side described hereinabove at an NCO Index of 100.

### Example 1:

A polyurethane foam was prepared by reacting Isocyanate A with the B-side described hereinabove at an NCO Index of 100.

### Example 2:

A polyurethane foam was prepared by reacting Isocyanate A with the B-side described hereinabove at an NCO Index of 100.

### Example 3:

A polyurethane foam was prepared by reacting Isocyanate A with the B-side described hereinabove at an NCO Index of 100.

Physical properties were determined for each foam using the following ASTM test methods.
- Shore A hardness:: ASTM D-2240
- tensile strength:: ASTM D-412
- elongation:: ASTM D-412
- die C tear:: ASTM D-624 and D-3489
- block tear:: ASTM D-3574F
- Taber abrasion resistance:: ASTM D-3489

**Table 1**

| Physical properties of foams | | | | | |
|---|---|---|---|---|---|
| | Example 1 | Example 2 | Example 3 | Example A | Example B |
| Density (pcf) | 22.5 | 28.1 | 34.3 | 18.7 | 28.6 |
| Hardness (Shore A) | 27 A | 34 A | 43 A | 20 A | 38 A |
| Tensile strength of skin (psi) | 241 | 311 | 396 | 159 | 271 |
| Tensile strength of core (psi) | 167 | 239 | 303 | 168 | 266 |
| Elongation of skin (%) | 328 | 344 | 352 | 233 | 269 |
| Elongation of core (%) | 320 | 342 | 339 | 274 | 286 |
| Die C tear (pli) | 42 | 59 | 71 | 25.2 | 39.6 |
| Block tear (pli) | 10.8 | 12.7 | 14.3 | 5.4 | 8.8 |
| Taber Abrasion resistance (mg/100 cycles) | 74.2 | 16.9 | 30.2 | 400 | 191 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for the production of an integral skin foam comprising filling a closed mold with a reaction mixture wherein said reaction mixture comprises:
A) a stable, liquid MDI-based prepolymer having an NCO content of 5 to 30%, and containing an allophanate-modified MDI, wherein said prepolymer comprises the reaction product of:
1) an allophanate-modified MDI prepared by reacting
i) an aliphatic alcohol or an aromatic alcohol, wherein said alcohol contains less than 16 carbon atoms,
with
ii) diphenylmethane diisocyanate comprising about 0 to 60% by weight of 2,4'-diphenylmethane diisocyanate, less than 6% by weight of the 2,2'-diphenylmethane diisocyanate, and the rest being 4,4'-diphenylmethane diisocyanate,
and
2) a polyether polyol containing from 2 to 3 hydroxyl groups and having a molecular weight of about 76 to 10,000;
B) an isocyanate-reactive composition comprising:
1) from 80 to 99% by weight, based on 100% by weight of components B)1) and B)2), of one or more high molecular weight organic compounds containing at least 2 isocyanate-reactive groups, and having a molecular weight of from about 2,000 to 10,000,
and
2) from 1 to 20%, based on the 100% by weight of components B)1) and B)2), of one or more low molecular weight organic compounds containing at least 2 isocyanate-reactive groups, and having a molecular weight of from about 32 to about 200,
C) a blowing agent comprising water;
and
D) at least one catalyst;
allowing said reaction mixture to fully react, and removing the resultant foamed part from the mold.

2. The process of Claim 1, wherein said stable, liquid MDI-based prepolymer has an NCO content of about 15 to 29% by weight, and comprises the reaction product of
1) an allophanate-modified MDI prepared by reacting:
i) an aliphatic alcohol or an aromatic alcohol which contains less than 9 carbon atoms,
with
ii) diphenylmethane diisocyanate comprising about 1 to 3% by weight of the 2,4'-isomer, about 0 to 1% by weight of the 2,2'-isomer and about 96 to 99% by weight of the 4,4'-isomer,
and
2) a polyether polyol having a molecular weight of about 150 to about 6,000.

3. The process of Claim 2, wherein said aliphatic alcohol 1)i) is selected from the group consisting of 1-butanol, 1-pentanol and 1-propanol.

4. The process of Claim 2, wherein said aromatic alcohol 1)i) is selected from the group consisting of phenol and m-cresol.

5. The process of Claim 1, wherein B) said isocyanate-reactive composition comprises
1) one or more high molecular weight organic compounds containing 2 to 3 isocyanate-reactive groups and having a molecular weight of about 4,000 to 6,000,
and
2) one or more low molecular weight organic compounds containing 2 to 3 isocyanate-reactive groups and having a molecular weight of about 60 to about 150.

6. The process of Claim 2, wherein the NCO content of said stable, liquid MDI-based prepolymer is from 18 to 27% by weight.

7. An integral skin foam produced by the process of Claim 1.
